# EUROPEAN PATENT APPLICATION

(11) **EP 2 523 088 A2**
(43) Date of publication of application: **14.11.2012**
(21) Application number: 12161014.1
(22) Date of filing: 23.03.2012
(51) Int. Cl.: G06F 3/048

(54) **Method and apparatus for providing graphic user interface having item deleting function**

(30) Priority: 11.05.2011 KR 20110043909
(71) Applicant: Samsung Electronics Co., Ltd., Suwon-si, Gyeonggi-do, 443-742 (KR)
(72) Inventor: Yang, Hui Chul, Gyeonggi-do (KR)
(74) Representative: Jenkins, Richard Gavin

(57) **Abstract**

A method of providing a graphic user interface (GUI) having an item deleting function includes displaying at least one item, detecting a touch position moving operation after a touch input is entered from a user and deleting the at least one item located on a moving path of the touch position moving operation.

## Description

### BACKGROUND OF THE INVENTION

### Field of the Invention

The present invention relates to a graphic user interface (GUI) of a display device, and more particularly, to a method and an apparatus for providing the GUI having a function to delete an item such as, for example, a text.

### Description of the Related Art

Recently, touch screen based terminals are widely used. In particular, touch screen based mobile communication terminals or tablet personal computers (PCs) have become a necessity of modern life. Users can write text messages or emails through the mobile communication terminals by using a short message service (SMS) or multimedia message service (MMS), search for information using an Internet browser, or perform contact management and scheduling via contact and calendar functions.

To this end, the terminal provides the user with a text input interface. The terminal displays a text input window and a keypad. When the user enters an input key using a character key or a number key, a text corresponding to the input key of the user is displayed on the text input window.

When the user wants to modify a text entry, the use enters a delete key on the keypad to delete a part or all of the text entry. Generally, one character of the text is deleted for each entry of the delete key. Therefore, if the user wants to delete a large volume of the text, the user must press the delete key repeatedly, which is inconvenient to the user.

To avoid such inconvenience, some terminals provide a key for deleting all entered text. However, such terminals still have disadvantages in that the user cannot delete a part of the entered text and the deleted text cannot be restored.

### SUMMARY OF THE INVENTION

The present invention overcomes the above-described problems by providing a display device and, a method of providing a graphic user interface (GUI), which operates an improved function for conveniently deleting items such as a text.

According to one aspect of the present invention, a method of providing a graphic user interface (GUI) having an item deleting function comprises for use in a mobile terminal. The method includes displaying at least one item, detecting a touch position moving operation after a touch input is entered from a user and deleting the at least one item located on a moving path of the touch position moving operation.

According to another aspect of the present invention, a display device for providing a graphic user interface (GUI) having an item deleting function. The display device comprises a display unit configured to display at least one item, a touch sensor unit configured to detect an input of a touch position moving operation after a touch input is entered from a user and a controller configured to determine a moving path of the touch position moving operation through the touch sensor unit and to control the display unit to display a screen in which the at least one item located on the moving path of the touch position moving operation is deleted.

According to the present invention, a user can promptly and easily a relatively large amount of a text without having to repeatedly enter a delete key formed on a keypad. For that matter, the user can promptly and easily delete not only a whole entered text but also a part of the entered text. In addition, a deleted text can be restored after being deleted.

### BRIEF DESCRIPTION OF THE DRAWINGS

The above features and advantages of the present invention will be more apparent from the following detailed description in conjunction with the accompanying drawings, in which:
FIG. 1 depicts an internal configuration of a display device of the invention;
FIG. 2 is a flow chart illustrating a method of providing a graphic user interface (GUI) having an item deleting function according to the invention;
FIG. 3 illustrates an item input window and a delete icon according to one embodiment of the invention;
FIG. 4 illustrates a screen of a display device performing the method according to the embodiment of FIG. 2;
FIG. 5 illustrates another screen of a display device performing the method according to the embodiment of FIG. 2;
FIG. 6 is a flow chart illustrating a method of providing a GUI having an item deleting function according to another embodiment of the invention;
FIG. 7 illustrates a screen of a display device performing the method according to the embodiment of FIG. 6;
FIG. 8 is a flow chart illustrating a method of providing a GUI having an item deleting function according to still another embodiment of the invention;
FIG. 9 illustrates a screen of a display device performing the method according to the embodiment of FIG. 8;
FIG. 10 is a flow chart illustrating a method of providing a GUI having an item deleting function according to still another embodiment of the invention; and
FIG. 11 illustrates an example screen of a display device performing the method according to the embodiment of FIG. 10.

### DETAILED DESCRIPTION

In the following description, the term 'item,' as used herein, refers to an individual graphical object inputted by a user through a keypad. The item may include a text such as a character or a number, a punctuation mark and an emoticon.

A display device according to the invention can be implemented as a portable terminal as well as a non-portable terminal such as a TV and a monitor. The portable terminal can include an information communication device or a multimedia device such as a mobile communication terminal, a portable multimedia player (PMP), a personal digital assistant (PDA) or an MP3 player.

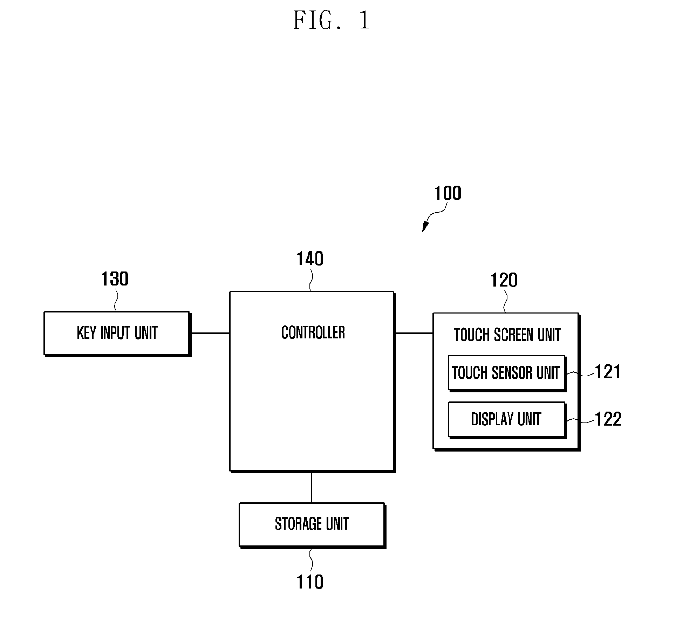

FIG. 1 depicts an internal configuration of a display device 100 according to an embodiment of the invention. The display device 100 includes a storage unit 110, a touch screen unit 120, a key input unit 130 and a controller 140.

The storage unit 110 stores a program and data for operating the display device 100. For example, the storage unit 110 can include an operating system (OS) for booting the display device 100, an application, and data comprising an image, audio or video content. Also, the storage unit 110 stores an application that allows the user to input an item and an algorithm for deleting the item according to a touch position moving operation.

The touch screen 120 includes a touch sensor unit 121 and a display unit 122. The touch sensor unit 121 detects a touch input from the user. The touch sensor unit 121 can be a capacitive overlay touch sensor or a resistive overlay touch sensor, but is not limited thereto. The touch sensor unit 121 can be any type of sensor that can detect a touch by an object. The touch sensor unit 121 detects the touch input of the user and generates a detection signal to be sent to the controller 140. The detection signal includes a coordinate data of the touch input of the user. When the user enters the touch position moving operation, the touch sensor unit 121 transmits the detection signal including the coordinate data of the touch position moving path to the controller 140.

The display unit 122 can include a liquid crystal display (LCD), an organic light emitting diode (OLED), and an active matrix organic light emitting diode (AMOLED) and visually presents the user with an input data or data stored in the display device 100. When performing the function that allows the user to input the item, the display unit 122 displays an item input window as well as a delete icon as an interface for deleting the item. When the user touches the delete icon and performs the touch position moving operation, the display unit 122 displays the delete icon that has been moved along the touch position moving path while an item located on a moving path of the delete icon is deleted.

The key input unit 130 is an input device formed on the display device 100 in an area separate from the touch screen unit 120. Similar to the touch sensor unit 120, upon receiving a user input, the key input unit 130 generates an input signal to be sent to the controller 140. The input unit 130 is implemented as a keypad having a number key and an arrow key. Alternatively, the key input unit 130 is implemented as a set of individual keys. The key input unit 130 can be a button type or touch sensor type. In one embodiment, when the display device 100 can be manipulated by using only the touch screen unit 120, the key input unit 130 can be omitted.

The controller 140 controls an overall operation of the display device 100. The controller 140 of the present invention displays a plurality of individual items through the display unit 122. When the controller 140, through the touch sensor unit 121, detects the touch position moving operation subsequent to the touch input, the controller 140 controls the display unit 122 to display a screen in which the item located on the moving path of the touch position moving operation is deleted. When a touch release is deleted by the touch sensor unit 121, the controller 140 terminates an item deleting process. When the touch position moving operation is detected on the location of the deleted item before the touch input is released, the deleted item located on the touch position moving path is restored.

The controller 140 controls the display 122 to display multiple items as well as the delete icon for providing the item deleting function and, when an input of the touch position moving operation is detected through the touch sensor unit 121 after the touch input is entered on the delete icon, the controller 140 controls the display unit 122 to display a screen in which the delete icon is moved along the touch position moving path and the item located on the moving path of the delete icon is deleted. When the controller 140, through the touch sensor unit 121, detects the touch position moving operation on a previous position of the deleted item before the touch is released, the controller 140 controls the display unit 122 to display a screen in which the delete icon is moved along the touch position moving path and the deleted item located on the moving path of the delete icon is restored.

According to the invention, when the touch position moving operation is detected through the touch sensor unit 121 after the touch input is entered, the controller 140 measures a moving speed of the touch position moving operation and compares the measured moving speed with a preset threshold speed Vth. When the moving speed is determined to be equal to or higher than the threshold speed Vth, the controller 140 controls the display unit 122 to display a screen in which all items arranged in a touch position moving direction are deleted. When the moving speed is determined to be lower than the threshold speed Vth, a screen is displayed in which an item located on the touch position moving path is deleted.

Also, when the touch position moving operation is detected through the touch sensor unit 121 on the previous location of the deleted item before the touch is released, the controller 140 measures the moving speed of the touch position moving operation and compares the measured moving speed with the preset threshold speed Vth. When the moving speed is determined to be equal to or higher than the threshold speed Vth, the controller 140 controls the display unit 122 to display a screen in which all the deleted items arranged in the touch position moving direction are restored. When the moving speed is determined to be lower than the threshold speed Vth, the display unit 122 is controlled to display a screen in which the item located on the touch position moving path is restored.

According to the invention, the controller 140 controls the display unit 122 to display multiple items and delete icons. When the touch input and the subsequent touch release are detected on the delete icon and the touch input is entered on the item through the touch sensor unit 121, the controller 140 controls the display unit 122 to display the delete icon moved to an area of the touch input of the item.

According to the invention, the controller 140 controls the display unit 122 to display the multiple items and delete icon. When the touch input on the delete icon followed by the touch position moving operation is detected through the touch sensor unit 121, the controller 140 measures the moving speed of the touch position moving operation and compares the measured moving speed with the preset threshold speed Vth. When the moving speed is determined to be equal to or higher than the threshold speed Vth, the controller 140 determines a moving direction of the touch position moving operation. When the moving direction of the touch position moving operation is determined to be a horizontal direction, the controller 140 controls the display unit 122 to delete items of a row arranged in the horizontal direction. When the moving direction is determined to be directed toward a starting point of an array of items, the controller 140 controls the display unit 122 to display a screen in which all items displayed in the item input window are deleted.

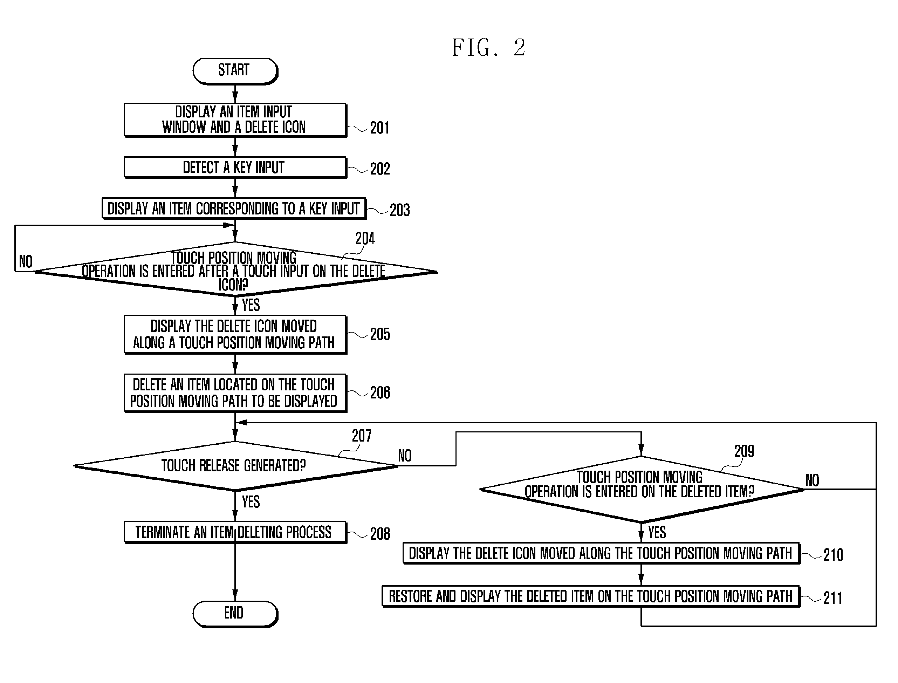

FIG. 2 is a flow chart illustrating a method of providing a graphic user interface (GUI) having an item deleting function of the display device 100 according to an embodiment of the invention.

The controller 140 controls the display unit 122 to display an item input window and a delete item (201). The item in the present invention refers to the individual graphic object that is entered by the user via the keypad and can include the text such as the character or the number, the punctuation mark, or the emoticon. The item input window has a certain size to display the item entered and a cursor can be displayed to indicate an insertion point of the item to be entered.

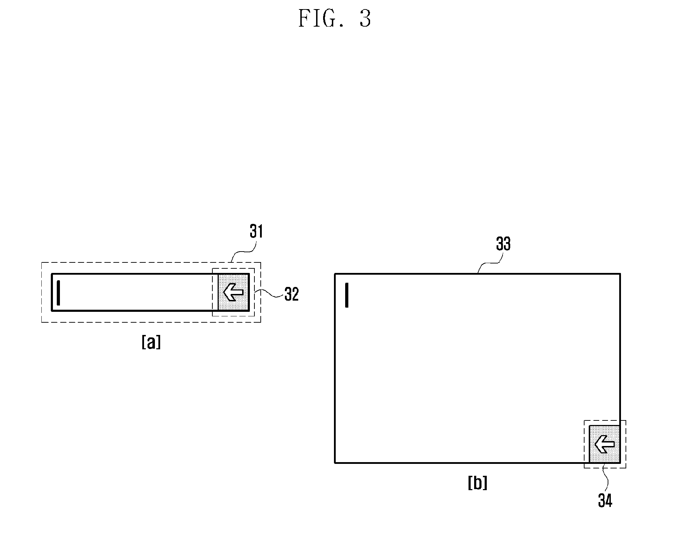

FIG. 3 illustrates an item input window and a delete icon according to the invention.
[a] of FIG. 3 shows an item input window 31 that receives one line of input items and a delete icon 32. The item input window 31 includes the cursor that indicates an item insertion point, and the delete the icon 32 includes an arrow sign that indicates the touch position moving direction.
[b] of FIG. 3 shows an item input window 33 that receives multiple lines of the input items and a delete icon 34. Similarly to [a] of FIG. 3, the item input window 33 includes the cursor and the delete icon 34 includes the arrow sign.

The controller 140 controls the touch sensor unit 121 to detect a key input (202 of FIG. 2). The controller 140 controls the display unit 122 to display the item input window and the delete icon as well as the keypad. When the user enters a key on the keypad displayed on the display unit 122, the controller 140 detects the key input through the touch sensor unit 121. When the key input unit 130 is provided on the display device 100 independently of the touch screen unit 120 and the user enters the key through the key input unit 130, the controller 140 detects the key input.

The controller 140 controls the display unit 122 to display an item corresponding to the key input. When the user enters, for example, an alphabet or a number through the touch screen unit 120 or the key input unit 130, the controller 140 controls the display unit 122 to display the inputted alphabet or number (203).

The controller 140, through the touch sensor unit 121, determines whether the touch position moving operation is entered after the touch input is entered on the delete icon (204). When the user wants to delete all or part of the entered items, a touch is entered on the delete icon and the touch position moving operation is entered toward the item to be deleted. The controller 140, through the touch sensor unit 121, detects the touch position moving operation entered after the touch input on the delete icon. In the embodiment of FIG. 2, the touch position moving operation is preferably a drag operation that has a moving speed lower than the preset threshold speed Vth and maintains the touch input after moving a touch position.

The controller 140 controls the display unit 122 to display a screen in which the delete icon is moved along the touch position moving path (205) and the controller 140 controls the display unit 122 to display a screen in which items located on the touch position moving path are deleted (206). When the items are arranged in a line, the controller 140, through the display unit 122, deletes the items located on a path through which the delete icon passes. When the items are arranged in multiple lines, the controller 140 controls the display unit 122 to delete the items located between previous and current locations of the moved delete icon.

When the user maintains the touch input, the controller 140 determines, through the touch sensor unit 121, whether the touch release is generated. If it is determined that the touch release is generated, the controller 140 terminates the item deleting process (208). The controller 140 maintains the screen displayed immediately before the touch release is generated and confirms deletion of the item. Here, the controller 140 can control the display unit 122 to restore the delete icon to its original position to be displayed.

If it is determined that the touch release is not generated, the controller 140 determines, through the touch sensor unit 121, whether the touch position moving operation is entered on the location of the deleted item (209). In order to restore the deleted item, the user enters the touch position moving operation on the location of the deleted item. When the touch position moving operation is detected on the location of the deleted item, the controller 140 controls the display unit 122 to display the deleted icon moved along the touch position moving path (210) and restore and display the deleted item located on the touch position moving path. Next, the controller 140 determines whether the touch release is generated (207). If it is determined that the touch release is generated, the controller 140 terminates the item deleting process (208).

According to the invention, if the controller 140 detects an input of the touch position moving operation following the touch input on the delete icon through the touch sensor unit 121, the controller 140 controls the display unit 122 to display the delete icon extended to a moved position and, when the touch release is detected, the display unit 140 controls the display unit 122 to display the delete icon returned to an original shape and position.

According to the invention, the controller 140 can control to display only the item input window and not the delete icon at step 201. When multiple items are displayed in the input window and the user enters the touch position moving operation after entering the touch input on the item, the controller 140 controls the display unit 122 to display a screen in which items located on the moving path of the touch position moving operation are deleted.

According to the invention, the controller 140 can control the display unit 122 to apply a dimming effect to the item located on the touch position moving path (206). Next, when the touch release is generated (207), the controller 140 controls the display unit 122 to display a screen in which the item to which the dimming effect is applied is deleted. In this manner, by applying the dimming effect to the item located on the touch position moving path instead of deleting the item when the user enters the touch position moving operation, the user is informed of which item is to be deleted and the item can be easily restored when needed.

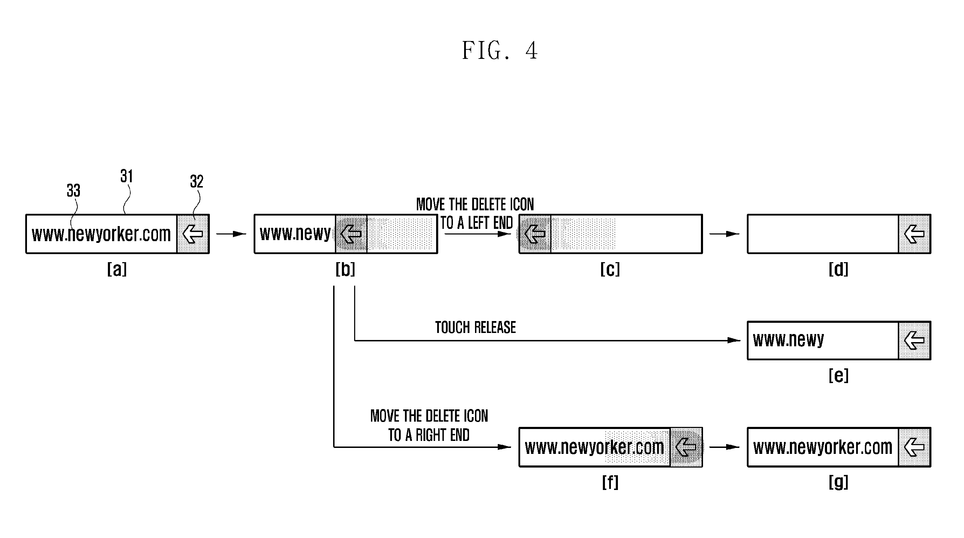

FIG. 4 illustrates an example screen of the display device 100 performing the method according to the embodiment of FIG. 2
[a] of FIG. 4 shows the item input window 31 that receives an input text in one line, the delete icon 32, and seventeen items 33 (w, w, w,., N, e, w, y , o, r, k, e, r,., c, o, m) and the user enters the touch input on the delete icon 32.
[b] of FIG. 4 shows the item input window 31 in which the user moves the delete icon 32 next to an item 'y.' In [b] of FIG. 4, a phrase 'orker.com' following the item 'y' is deleted wherein a phrase 'www.newy' preceding and including the item 'y' remains.
In [c] of FIG. 4, the user moves the delete icon 32 to a left end of the item input window 31. In [c] of FIG. 4, it is shown that the seventeen items 33 (www.newyorker.com) originally displayed are all deleted.
[d] of FIG. 4 corresponds to a screen which is displayed when the user releases the touch in [c] of FIG. 4. In [d] of FIG. 4, the delete icon 32 is returned to its original position and deletion of the seventeen items 33 originally displayed is maintained.
[e] of FIG. 4 corresponds to a screen which is displayed when the user releases the touch in [b] of FIG. 4. In [e] of FIG. 4, the delete icon 32 is shown to be returned to the original position, and the items 'www. newy' displayed in the screen [b] of FIG. 4 are maintained to be displayed.
[f] of FIG.4 shows the item input window 31 in which the user enters the touch position moving operation in a direction opposite to a direction in which the items are deleted. In [f] of FIG. 4, according to the touch position moving operation entered, the items 'orker.com' deleted in [b] of FIG. 4 are restored and displayed. [g] of FIG. 4 is a screen that is displayed when the user releases the touch input in [f] of FIG. 4. In [g] of FIG. 4, the item input window 31 displayed in [f] of FIG. 4 is maintained.

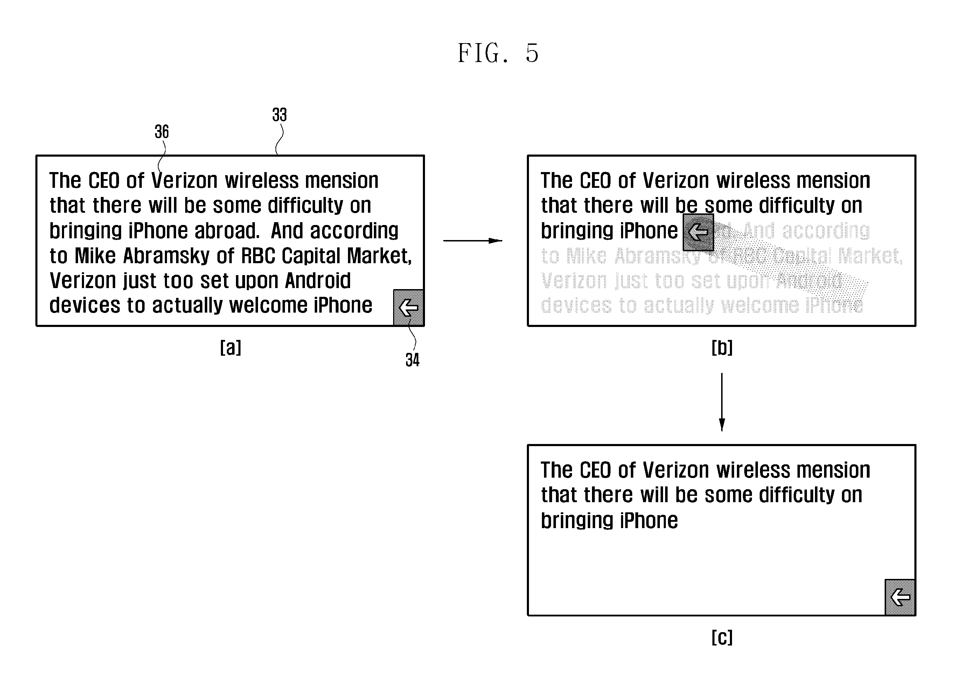

FIG. 5 illustrates another screen of the display device 100 performing the method according to the embodiment of FIG. 2.
[a] of FIG. 5 shows the item input window 33 in which the input items are entered in multiple lines, the delete icon 34, and multiple items 36 formed in six lines (T, h, e, C, E, O, ..... i, P, h, o, n, e) and the delete icon 34 after being touched by the user.
[b] of FIG. 5 shows the delete icon 34 moved by the user to be placed next to a word 'iPhone' in a third line. In [b] of FIG. 5, the phrase before the delete icon 34 'The CEO - bringing iPhone' is maintained and a dimming effect is applied to items 'abroad. And according - iPhone' located between previous and current positions of the moved delete icon 34.
[c] of FIG. 5 shows a screen displayed when the user releases the touch in [b] of FIG. 5. The delete icon 34 of [c] of FIG. 5 is displayed as restored to the original position and the items 'abroad. And according - iPhone' marked dimmed have been deleted.

The phrase 'The CEO - bringing iPhone' is maintained to be displayed.

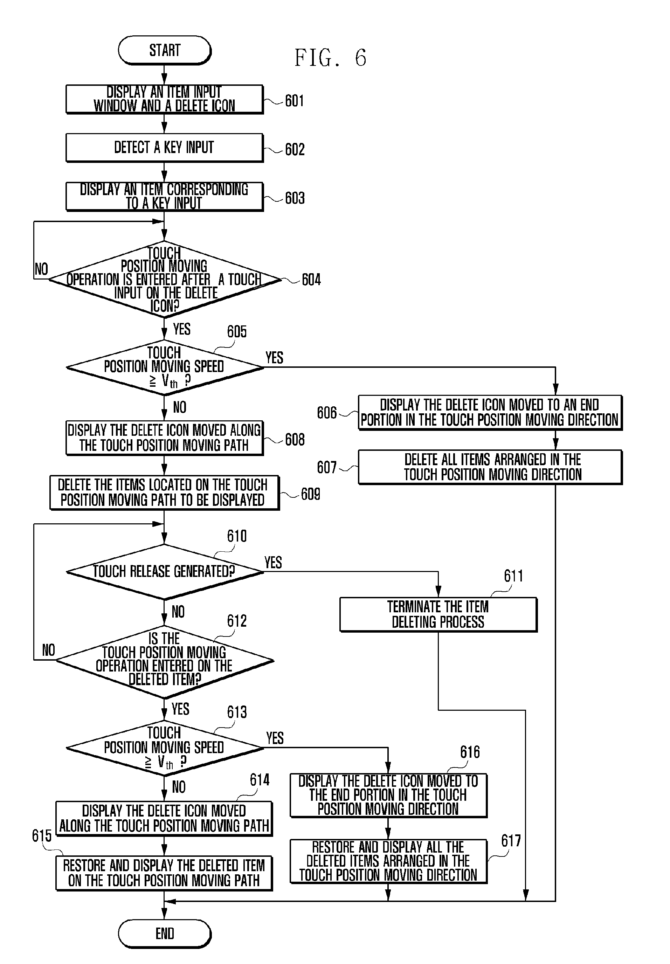

FIG. 6 is a flow chart illustrating a method of providing a graphic user interface (GUI) having an item deleting function according to another embodiment of the invention. In the embodiment of FIG. 6, the moving speed of the touch position moving operation inputted by the user is measured and different operations are performed based on the measured moving speed.

The controller 140 controls the display unit 122 to display the item input window and the delete item (601). If a key input is detected through the touch sensor unit 121 (602), the controller 140 controls the display unit 122 to display an item corresponding to the key input (603). If the touch position moving operation is received after the touch input is entered on the delete icon through the touch sensor unit 121 (604), the controller 140 determines whether the touch position moving speed is equal to or greater than the preset speed threshold speed Vth (605).

In the embodiment of FIG. 6, the touch position moving operation having a speed equal to or greater than the preset speed threshold speed Vth is preferably a flick operation in which the touch is released immediately after the touch position moving operation is entered. In other words, the controller 140 determines whether the touch position moving operation of which speed is equal to or greater than the preset threshold speed Vth is entered and the touch is released immediately thereafter or whether the touch position moving operation of which speed is lower than the preset threshold speed Vth is entered and the touch input is maintained thereafter at step 604 and step 605.

If it is determined that the touch position moving speed is equal to or greater than the preset speed threshold speed Vth at step 605, the controller 140 controls the display unit 122 to display the delete icon moved to an end portion in the touch position moving direction (606) and to display the item input window in which all items arranged in the touch position moving direction are deleted (607). In other words, if the items are arranged in a horizontal direction, the delete icon is positioned on a right side of the item input window and the user touches the delete icon and enters the flick operation in a left direction, the controller 140 controls the display unit 122 to display the item input window in which the delete icon is moved to a left end thereof and items arranged in a direction through which the delete icon passes are deleted.

In the invention, the controller 140 can control the display unit 122 to display the item input window in which the delete icon is moved to the end portion in the touch position moving direction and then restored to the original position.

If it is determined that the touch position moving speed is lower than the preset speed threshold speed Vth at step 605, the controller 140 controls the display unit 122 to display the delete icon moved along the touch position moving path (608) and controls the display unit 122 to display the item input window in which the items located on the touch position moving path are deleted (609). If the items are arranged in a single line, the controller 140 controls the display unit 122 to display the item input window in which the items located on a travel path of the delete icon are deleted, and if the items are arranged in multiple lines, the controller 140 controls the display unit 122 to display the item input window in which the items positioned between the previous and current locations of the delete icon are deleted.

At step 609, the user maintains the touch input. Next, the controller 140 determines, through the touch sensor unit 121, whether the touch release is generated (610). If it is determined that the touch release is generated, the controller 140 terminates the item deleting process (611). If it is determined that the touch release is not generated at step 610, the controller 140, through the touch sensor unit 121, determines whether the touch position moving operation is entered on the deleted item (612). Namely, the controller 140, through the touch sensor unit 121, determines whether the touch position moving operation is entered in a location in which the deleted item previously existed. If it is determined that the touch position moving operation is entered, the controller 140 determines whether the touch position moving speed is equal to or greater than the preset speed threshold speed Vth (613).

In an embodiment the controller 140 can determine whether the touch position moving operation having a speed equal to or greater than the preset threshold speed Vth is entered and the touch is released immediately thereafter or whether the touch position moving operation having a speed lower than the preset threshold speed Vth is entered and the touch input is maintained thereafter (step 612 and step 613).

If it is determined that the touch position moving operation of which speed is lower than the preset threshold speed Vth is entered at step 613, the controller 140 controls the display unit 122 to display the delete icon moved along the touch position moving path (614) and to restore and display the deleted item on the touch position moving path (615). In other words, the display unit 122 restores and displays the deleted item located on the touch position moving path.

If it is determined that the touch position moving speed is equal to or greater than the preset threshold speed Vth at step 613, the controller 140 controls the display unit 122 to display the delete icon moved to the end portion in the touch position moving direction (616) and restores all the deleted items arranged in the touch position moving direction (617). Namely, the display unit 122 restores and displays all the items arranged in the touch position moving direction. If the items are arranged in the horizontal direction and the flick operation is entered in a right direction, the controller 140 controls the display unit 122 to move the delete icon to a right end of the item input window while restoring and display all the deleted items arranged in a direction through which the delete icon passes.

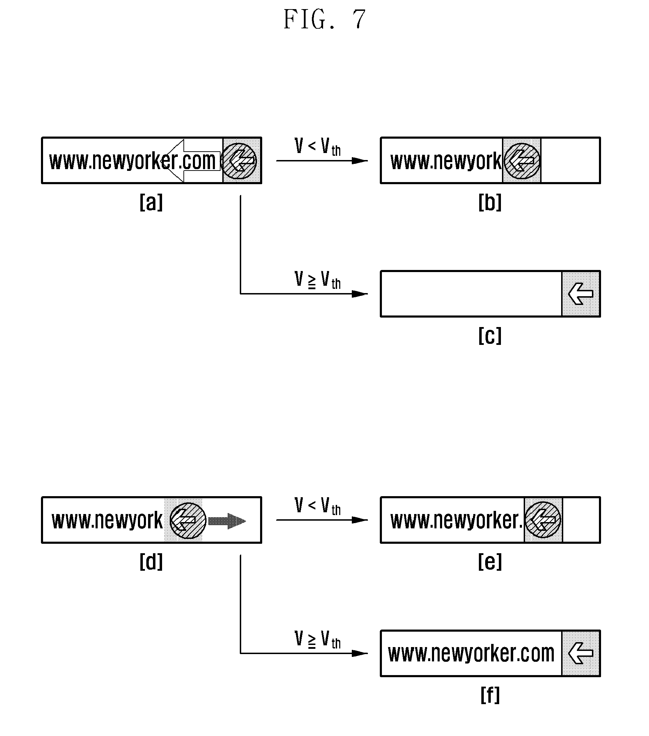

FIG. 7 illustrates a screen of the display device 100 performing the method according to the embodiment of FIG. 6.
[a] of FIG. 7 shows the item input window 31 that receives one line of the input items, the delete icon 32, and seventeen items 35 (w, w, w, ., n, e, w, y, o, r, k, e, r, ., c, o, m). As shown, the user enters the touch position moving operation in the left direction after entering the touch input on the delete icon 32.
[b] of FIG. 7 shows the item input window 31 displayed when the user moves the delete icon 32 next to an item 'k' at a speed lower than the threshold speed Vth and maintains the touch. In [b] of FIG. 7, the delete icon 32 is moved next to the item 'k' and a phrase 'er.com' following the item 'k' is deleted while a phrase 'www.newyork' preceding and including the item 'k' is maintained.
[c] of FIG. 7 shows the item input window 31 displayed when the user moves the delete icon 32 to the left direction at a speed equal to or greater than the threshold speed Vth and the touch is released. The controller 140 controls the display unit 122 to display the item input window 31 in which the delete icon 32 is moved to a left end of the item input window 31 and then restored back to the original position thereof. [c] of FIG. 7 shows a result of the above operation such that the seventeen items originally displayed in the item input window 31 are all deleted and the delete icon 32 is returned to the original position thereof.
[d] of FIG. 7 shows a case in which the user enters the touch position moving operation to the right direction on the item input window of [b] of FIG. 7.
[e] of FIG. 7 shows the item input window 31 displayed when the user moves the delete icon 32 next to an item '.' at a speed lower than the threshold speed Vth and then the touch is maintained. In [e] of FIG. 7, the delete icon 32 is moved next to the item '.' and the deleted items 'er.' are then restored.
[f] of FIG. 7 shows a case in which the user moves the delete icon 32 to the right direction at a speed equal to or greater than the threshold speed Vth, and then the touch is released. The controller 140 controls the display unit 122 to display the delete icon 32 moved to a right end of the item input window 31. [f] of FIG. 7 shows a result of the above operation. Compared to [b] of FIG. 7, the deleted items 'er.com' are restored and the delete icon 32 is returned to the original position thereof.

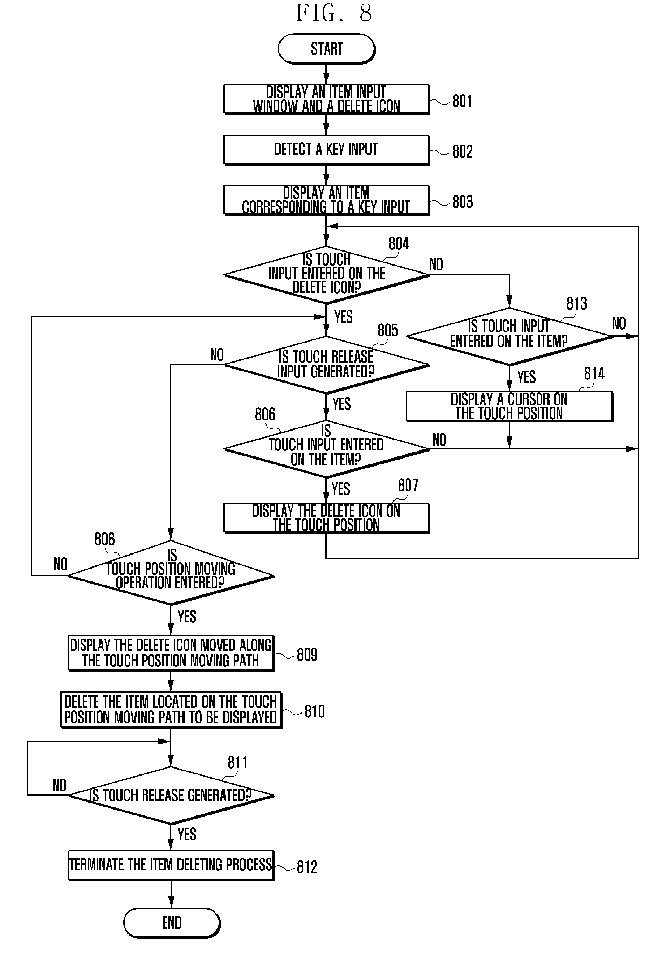

FIG. 8 is a flow chart illustrating a method of providing a graphic user interface (GUI) having an item deleting function according to still another embodiment of the invention. In the embodiment of FIG. 8, the user can select a starting point for the item deleting function.

The controller 140 controls the display unit 122 to display the item input window and the delete item (801). If the key input is detected through the touch sensor unit 121 (802), the controller 140 controls the display unit 122 to display an item corresponding to the key input (803). When the touch on the delete icon is received through the touch sensor unit 121, the controller 140 determines whether the touch release is immediately entered (805). If it is determined that the touch release from the delete icon is generated, the controller 140, through the touch sensor unit 121, determines whether the touch input is generated on the item (806). If it is determined that the touch input is generated on the item, the controller 140 controls the display unit 122 to display the delete icon on a touch position (807). Thus, the delete icon is moved to a position selected by the user.

Next, the controller determines whether the touch input is generated on the delete icon through the touch sensor unit 121 (804). If it is determined that the touch input is generated on the delete icon at step 804 and the touch release is not entered at step 805, the controller 140 determines whether the touch position moving operation is entered (808).

If it is determined that the touch position moving operation is entered, the controller 140 controls the display unit 122 to move the delete icon along the touch position moving path to be displayed (809) and controls the display unit 122 to delete the item located on the touch position moving path to be displayed (810). If the items are arranged in a line, the controller 140 controls the display unit 122 to display the item input window in which items located on a path through which the delete icon passes are deleted. If items are arranged in multiple lines, the controller 140 controls the display unit 122 to display the item input window in which items located between the previous and current positions of the moved delete icon are deleted.

At step 810, the user maintains the touch input. The controller 140, through the touch sensor unit 121, determines whether the touch release is generated (811). If it is determined that the touch release is generated, the controller 140 terminates the item deleting process (812).

If it is determined that the touch input is not entered on the delete icon at step 804, the controller 140 determines, through the touch sensor unit 121, whether the touch input is generated on the item (813). If it is determined that the touch input is generated, the controller 140 controls the display unit 122 to display a cursor on the touch position (814).

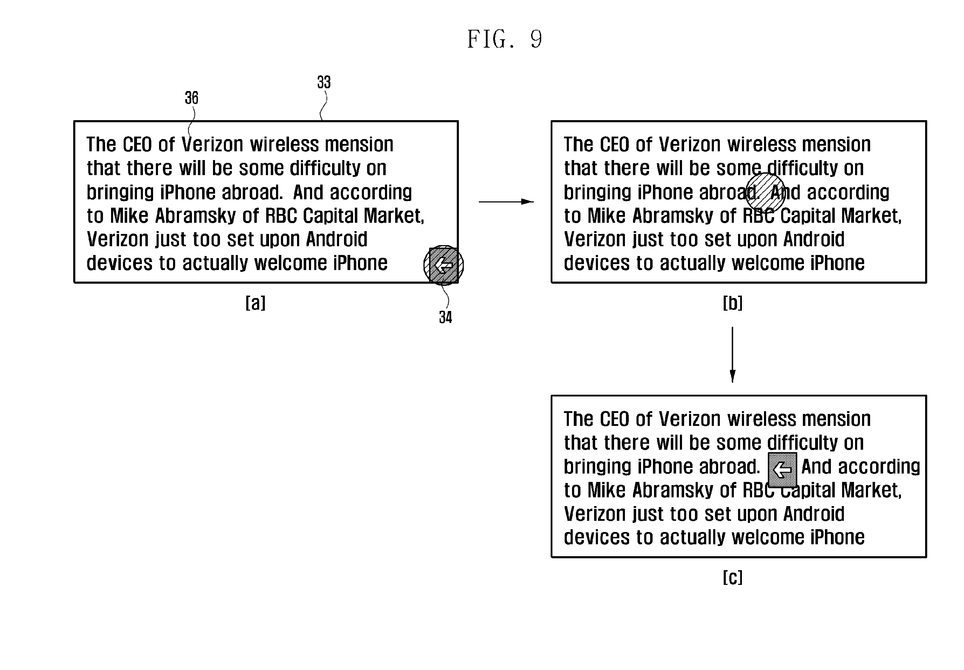

FIG. 9 illustrates a screen of the display device 100 performing the method according to the embodiment of FIG. 8.
[a] of FIG. 9 shows the item input window 33 that receives input items in multiple lines, the delete icon 34, and multiple items 36 (T, h, e, C, E, O, ..... i, P, h, o, n, e) formed in six lines, and the user enters the touch on the delete icon 34.
[b] of FIG 9 is displayed when the user releases the touch on the delete icon 34 in [a] of FIG. 9 and enters the touch next to a phrase 'abroad' and [c] of FIG. 9 is displayed when the user releases the touch in [b] of FIG. 9. In [c] of FIG. 9, the delete icon 34 is displayed as moved to the touch position selected by the user. Next, when the user touches the delete icon 34 to enter the touch position moving operation, it is shown that the items located on the moving path of the delete icon 34 are deleted.

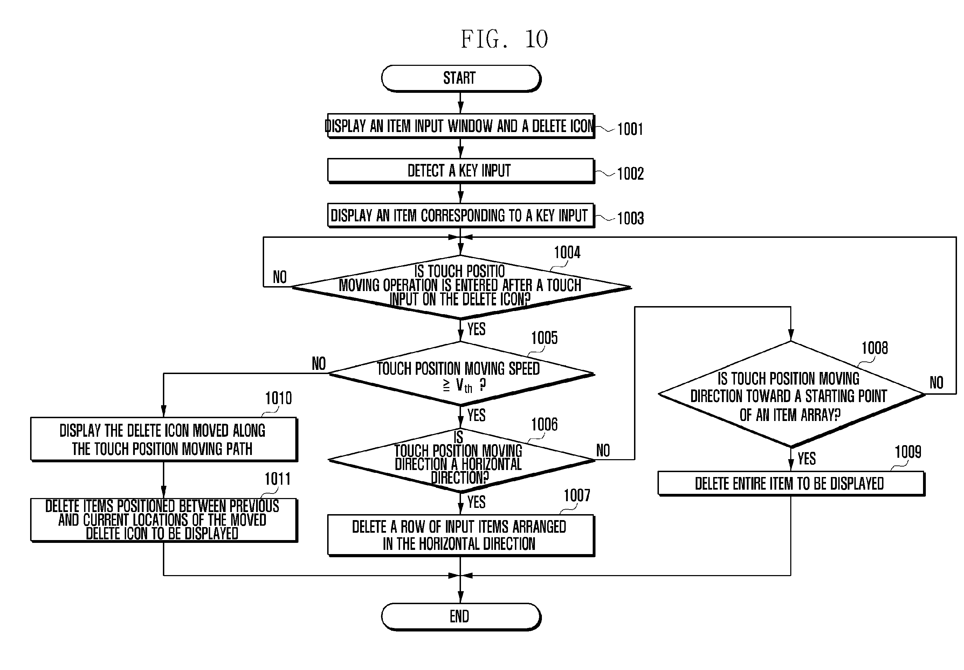

FIG. 10 is a flow chart illustrating a method of providing a graphic user interface (GUI) having an item deleting function according to still another embodiment of the invention. In the embodiment of FIG. 10, different operations are performed depending on the speed of the touch position moving operation entered by the user and the moving direction thereof. In the embodiment of FIG. 10, it is assumed that the item input window allows an input of the item arranged in multiple lines.

The controller 140 controls the display unit 122 to display the item input window and the delete item (1001) and, when the key input is detected through the touch sensor unit 121 (1002), the controller 140 controls the display unit 122 to display an item corresponding to the key input (1003). Here, it is assumed that the user enters the item in multiple lines. If the touch position moving operation is received after the touch input is entered on the delete icon through the touch sensor unit 121 (1004), the controller 140 determines whether the touch position moving speed is equal to or greater than the preset speed threshold speed Vth (1005).

In the embodiment of FIG. 10, the touch position moving operation having a speed equal to or greater than the preset speed threshold speed Vth is preferably the flick operation in which the touch is released immediately after the touch position moving operation is entered. At step 1004 and step 1005, the controller 140 determines whether the touch position moving operation of which speed is equal to or greater than the preset threshold speed Vth is entered and whether the touch is released immediately thereafter or whether the touch position moving operation of which speed is lower than the preset threshold speed Vth is entered and the touch input is maintained thereafter.

If it is determined that the touch position moving speed is equal to or greater than the threshold speed Vth at step 1005, the controller 140 determines whether the touch position moving direction is a horizontal direction (1006). In the embodiment of FIG. 10, the horizontal direction indicates a direction parallel to the delete icon. If it is determined that the touch position moving direction is the horizontal direction, the controller 140 controls the display 122 to display the item input window in which a line of the items positioned in the horizontal direction of the delete icon is deleted (1007). Namely, the controller 140 controls the display unit 122 to display the item input window in which a row of the items arranged in the direction parallel to the delete icon is deleted.

If it is determined that the touch position moving direction is not the horizontal direction at step 1006, the controller 140 determines whether the touch position moving direction is toward a starting point of an item array (1008). In the embodiment of FIG. 10, the direction toward the starting point of the item array is a direction toward a location of an item that is firstly input among the items displayed on the item input window. The controller 140 determines, through the touch sensor unit 121, whether the touch position moving direction is directed toward an upper left corner of the item input window (1008).

If it is determined that the touch position moving direction is toward the starting point of the item array at step 1008, the controller 140 controls the display unit 122 to display the item input window in which all the items in display are deleted (1009). In other words, the user can delete all entered items or a last line by using a single flick gesture.

If it is determined that the touch position moving operation has a moving speed lower than the preset threshold speed Vth at step 1005, the controller 140 controls the display unit 122 to display the item input window in which the delete icon is moved along the touch position moving path (1010) and the items positioned between the previous and current locations of the moved delete icon are deleted (1011).

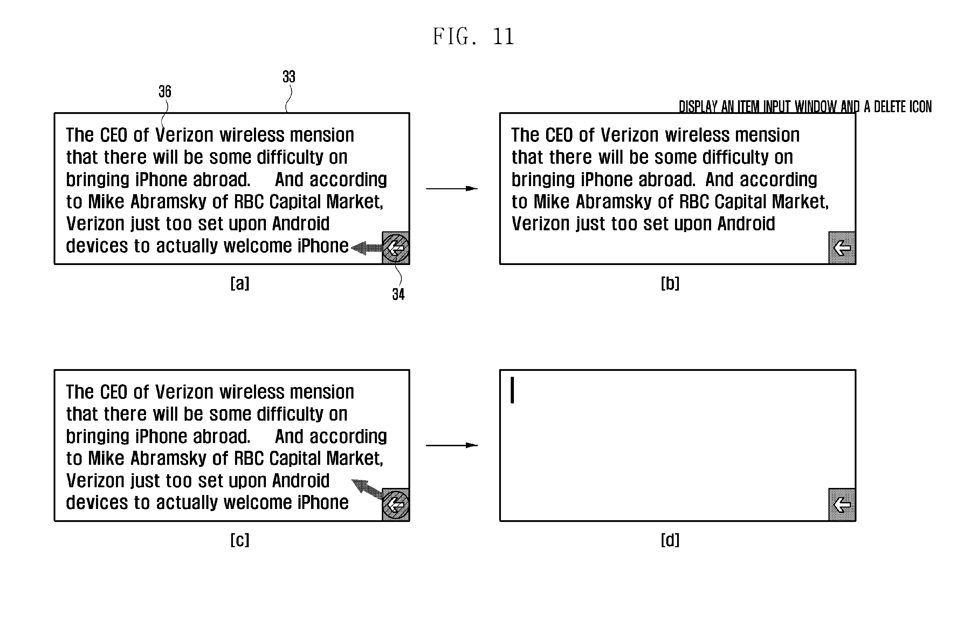

FIG. 11 illustrates a screen of the display device 100 performing the method according to the embodiment of FIG. 10
[a] of FIG. 11 shows the item input window 33 that receives multiple lines of input items, the delete icon 34, and multiple items 36 (T, h, e, C, E, O, ..... i, P, h, o, n, e) formed in six lines. The user enters the touch position moving operation to the left direction after entering a touch on the delete icon 34. Herein, it is assumed that the user enters the flick gesture in which the touch position moving operation has a speed equal to or greater than the threshold speed Vth and the touch is released immediately after the touch position is moved.
[b] of FIG. 11 shows a screen displayed when the user enters the flick operation to the left direction in the item input window in [a] of FIG. 11. The controller 140 controls the display unit 122 to display the screen in which the delete icon 34 is moved to a bottom left end of the item input window 33 and returned to the original position. The items 'devices ∼ iPhone' located on the moving path of the touch position moving operation in the item input window 33 are deleted. [b] of FIG. 11 shows a result of the above operation in which a line of the items 'devices ∼ iPhone' located in the left direction of the delete icon 34 in [a] of FIG. 11 is deleted.

Similarly to [a] of FIG. 11, [c] of FIG. 11 displays the item input window 33 that receives multiple lines of the input items, the delete icon 34, and multiple items 36 (T, h, e, C, E, O, ..... i, P, h, o, n, e) formed in six lines. The user enters the touch on the delete icon 34 and subsequently enters the touch position moving operation toward the left upper corner of the item input window 33.
[d] of FIG. 11 shows a screen displayed when the user enters the flick operation toward the left upper corner of the item input window 33 in the screen [c] of FIG. 11. The controller 140 controls the display unit 122 to display a screen in which the delete icon 34 is moved to the left upper corner of the item input window 33 and returned to the original position. [d] of FIG. 11 displays a screen in which all the items displayed in the item input window 33 are deleted. In other words, [d] of FIG. 11 shows a result of the above operation in which all the items are deleted.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

According to the invention, the user can quickly and easily delete a relatively large amount of text without having to repeatedly enter a delete key on the keypad. In particular, not only all of an input text can be deleted but also a part of the input text can be quickly and easily selected to be deleted.

## Claims

1. A method of providing a graphic user interface (GUI) having an item deleting function in a display device, the method comprising:
displaying at least one item;
detecting a touch position moving operation in response to entry of a touch input; and
deleting the at least one item located on a moving path of the touch position moving operation.

2. The method according to claim 1, further comprising:
detecting the touch position moving operation on the at least one deleted item; and
restoring and displaying the deleted item located on the moving path of the touch position moving operation.

3. The method according to claim 1, wherein displaying at least one item comprises:
displaying a delete icon.

4. The method according to claim 3, wherein detecting the touch position moving operation comprises:
detecting the touch position moving operation after the touch input is entered on the delete icon.

5. The method according to claim 4, wherein deleting the at least one item comprises:
moving the delete icon along the moving path of the touch position moving operation; and
deleting the at least one item located on a moving path of the delete icon.

6. The method according to claim 1, wherein detecting the touch position moving operation comprises:
measuring a moving speed of the touch position moving operation; and
determining whether the measured moving speed is equal to or higher than a predefined threshold speed.

7. The method according to claim 6, wherein deleting the at least one item comprises:
deleting an entire item arranged in a moving direction of the touch position moving operation when the moving speed is equal to or higher than the threshold speed; and
deleting the at least one item located on the moving path of the touch position moving operation when the moving speed is lower than the threshold speed.

8. The method according to claim 2, wherein detecting the touch position moving operation on the at least one deleted item comprises:
measuring a moving speed of the touch position moving operation entered; and
determining whether the measured moving speed is equal to or higher than a threshold speed.

9. The method according to claim 8, wherein restoring and displaying the deleted item comprises:
restoring and displaying an entire deleted item arranged in a moving direction of the touch position moving operation when the moving speed is equal to or higher than the threshold speed; and
restoring and displaying the deleted item located on the moving path of the touch position moving operation when the moving speed is lower than the threshold speed.

10. The method according to claim 1, wherein deleting the at least one item comprises:
applying a dimming effect to the at least one item located on the moving path of the touch position moving operation;
detecting a touch release input; and
deleting the at least one item to which the dimming effect is applied.

11. The method according to claim 5, after displaying at least one item, further comprising:
detecting a touch release input after the touch input is entered on the delete icon;
detecting the touch input on the at least one displayed item; and
displaying the delete icon moved to a touch position.

12. The method according to claim 1, wherein detecting a touch position moving operation comprises:
measuring a moving speed of the touch position moving operation;
determining whether the measured moving speed is equal to or higher than a predefined threshold speed; and
determining a moving direction of the touch position moving operation when the measured moving speed is equal to or higher than the threshold speed.

13. The method according to claim 12, wherein deleting the at least one item comprises:
displaying a screen in which a row of items arranged in a horizontal direction is deleted when the moving direction is the horizontal direction;
displaying a screen in which an entire displayed item is deleted when the moving direction is toward a starting point of an item array; and
deleting the at least one item located on the moving path of the touch position moving operation when the measured moving speed is lower than the threshold speed.

14. A display apparatus for providing a graphic user interface (GUI) operating an item deleting function, the display apparatus comprising:
a display unit configured to display at least one item;
a touch sensor unit configured to detect an input of a touch position moving operation in response to entry of a touch input; and
a controller configured to determine a moving path of the touch position moving operation through the touch sensor unit and to control the display unit to display a screen in which the at least one item located on the moving path of the touch position moving operation is deleted.

15. The display apparatus according to claim 14, wherein the controller is configured to restore and display, through the display unit, the at least one deleted item located on the moving path of the touch position moving operation when the touch position moving operation is detected through the touch sensor unit on the at least one deleted item.
